# EUROPÄISCHE PATENTSCHRIFT

(11) **EP 0 632 290 B1**
(45) Veröffentlichungstag und Bekanntmachung des Hinweises auf die Patenterteilung: **12.01.2000**
(21) Anmeldenummer: 94810359.3
(22) Anmeldetag: 20.06.1994
(51) Int. Cl.: G01S 17/02

(54) **Anordnung und Verfahren zur berührungslosen Steuerung des Wasserflusses einer Sanitäranlage**
Apparatus and method for touch-free control of waterflow in a sanitary installation
Appareil et procédé de commande sans contact du débit d'eau dans une installation sanitaire

(30) Priorität: 30.06.1993 CH 195593
(43) Veröffentlichungstag der Anmeldung: 04.01.1995
(73) Patentinhaber: GEBERIT TECHNIK AG, 8645 Jona (CH)
(72) Erfinder: Mauerhofer, Alex, CH-7324 Vilters (CH)
(74) Vertreter: Groner, Manfred

(56) Entgegenhaltungen:
- EP-A- 0 463 440
- EP-A- 0 547 415
- US-A- 4 767 922
- FEINWERKTECHNIK + MESSTECHNIK, Bd.97, Nr.6, Juni 1989, MUENCHEN DE Seiten 261 - 264, XP98231 MEINERT ET AL 'hintergrundausblendung bei lichttastern'

## Beschreibung

Die Erfindung betrifft eine Anordnung nach dem Oberbegriff des Anspruchs 1 sowie ein Verfahren zum Betrieb einer solchen Anordnung. Die Erfindung betrifft ebenfalls eine berührungslos betätigbare Sanitärarmatur, insbesondere Waschtischarmatur mit einer erfindungsgemässen Anordnung.

Die berührungslose Steuerung des Wasserflusses einer Sanitäranlage kommt heute immer mehr zur Anwendung, einerseits im öffentlichen Bereich aus hygienischen Gründen, andererseits generell zur Reduktion des Wasserverbrauchs.

Durch die gattungsbildende EP-A-0 463 440 ist eine Schaltungsanordnung für eine berührungslos gesteuerte Sanitärarmatur bekannt geworden. Bei dieser wird bei der Erstinstallation automatisch ein Initialisierungsvorgang eingeleitet. Der bei dem Initialisierungsvorgang ermittelte Wert der Leistung des Senders wird mit einem vorgegebenen Toleranzbereich verglichen. Damit wird ein besonderer Betriebsmodus geschaffen, welcher dem eigentlichen Normalbetrieb vorgeschaltet ist. Die Druckschrift Feinwerktechnik + Messtechnik Bd 97, Nr. 6, Juni 1989, München DE, Seiten 261 - 264, XP98231 Meinert et al. ,,Hintergrundausblendung bei Lichttastern" offenbart einen Reflexions-Lichttaster, mit dem durch unterschiedliche Strahlführungsgeometrien Funktionsbereiche innerhalb grober Grenzen eingeschränkt werden können. Zur Tastbereichsbegrenzung wird das Triangulations-Prinzip verwendet.

Bekannte Steuersysteme zur berührungslosen Betätigung von Waschanlagen basieren auf einer Infrarot-Sensorik. Ein mit konstanter, eventuell impulsförmiger Strahlungsleistung arbeitender Infrarotsender, wird so eingestellt, dass das Waschtischbecken von einem mit einstellbarer Empfindlichkeit arbeitenden Infrarotempfänger nicht erfasst wird, wohl aber ein im Zwischenbereich befindlicher Gegenstand, z.B. ein Körperteil, insbesondere eine Hand.

Im Stand der Technik ist eine solche Anordnung beispielsweise durch die CH-A-646 766 bekannt geworden. Diese weist einen berührungslos betätigbaren Infrarot-Lichttaster auf, der in einem Wasserauslauf eingebaut ist. Bei der Einführung eines Gegenstandes in die Erfassungszone des Lichttasters spricht dieser an. Erfassungzone ist bei dieser Anordnung der Ueberschneidungsbereich zwischen einer Sende- und Empfangskeule. Die Sendeleistung des Infrarotstrahls ist dabei konstant.

Bei dieser Anordnung ist der Stromverbrauch relativ hoch, was bei einer Netzstromversorgung auch weiter nicht stört. Bei der Montage ist es erforderlich, die Erfassungszone exakt einzustellen. Nachteilig ist zudem, dass die Erfassungszone vom Reflexionsgrad des Gegenstandes abhängig ist. Muss man damit einen vorhandenden Hintergrund ausblenden, so ist man bei einem gut reflektierenden Hintergrund, z.B. einem Waschbecken, gezwungen, die Reichweite des Systems entsprechend zu begrenzen, was zu einer unerwünschten Einschränkung der Erfassungszone führt.

Durch die CH-A-651 143 ist eine elektronische Steuerungsanordnung zur berührungslosen Steuerung eines Wasserflusses bekannt geworden, bei der zwei im Abstand zueinander angeordnete Signalgeber vorgesehen sind und die nach dem Triangulationsverfahren arbeitet. Nachteilig ist bei dieser Anordnung insbesondere, dass sie eine Miniaturisierung, und damit eine Unterbringung im Wasserauslass einer Waschtischarmatur ausschliesst. Auch hier sind bei der Montage Einstellarbeiten durch den Sanitärmonteur vorzunehmen.

Die heute im Einsatz stehenden elektronischen Steuersysteme von berührungslos betätigbaren Sanitäranlagen benötigen infolge ihres systembedingt hohen Stromverbrauchs im allgemeinen eine Netzstromversorgung. Dies erschwert oder verunmöglicht eine Nachrüstung und verursacht bei einer Neuinstallation Montagekosten, welche oft diejenigen des Steuersystems selbst übersteigen.

Das elektronische Steuersystem moderner Sanitäranlagen, insbesondere von Waschanlagen, wird aus diesen Gründen mit einer Batterie betrieben und ist montagefreundlich samt Batterie in der Waschtischarmatur vollständig integriert.

Ein praxisgerechter Batteriebetrieb ist jedoch nur dann möglich, wenn das System mit extrem geringem Stromverbrauch arbeiten kann. Eine vollständige Integration des elektronischen Steuersystems inklusive der Batterie z.B. in eine Waschtischarmatur ist aus ästhetischen Gründen wiederum nur dann möglich, wenn die Elektronik und Infrarot-Optik weitgehend miniaturisiert werden kann.

Eine berührungslos arbeitende Waschtischarmatur soll ohne spezielle Einstellarbeiten an allen auf dem Markt angebotenen Waschbecken montiert werden können und dabei stets einen optimalen Erfassungsbereich für die Handerkennung aufweisen.

Die Steuerfunktionen einer modernen Waschtischarmatur sollen den Absichten des Benützers so weit wie möglich entgegenkommen, d.h. die Waschtischarmatur muss eine gewisse "Eigenintelligenz" aufweisen.

Der Erfindung liegt die Aufgabe zugrunde, eine Anordnung der genannten Art zu schaffen, welche dank einer sehr stromsparenden Arbeitsweise eine lange Batterielebensdauer ermöglicht und sich unter Beibehaltung eines optimalen Erfassungsbereichs für die Gegenstands- bzw. Handerkennung selbsttätig an einen Hintergrund, z.B. an unterschiedliche Formen und Materialien von Waschtischen, anpasst. Die Aufgabe ist durch die Erfindung gemäss Anspruch 1 gelöst.

Die erfindungsgemässe Anordnung besteht aus einem Infrarot-Lichtimpulssender, einem Infrarot-Empfänger mit Schwellwertverstärker sowie einer Steuerelektronik. Die Anordnung weist eine durch die Steuerelektronik varierbare Strahlungsleistung des Infrarot-Lichtimpulssenders auf. Damit ergibt sich die Möglichkeit, bei konstanter Empfindlichkeit des mit einem Schwellwertverstärker ausgerüsteten Infrarot-Empfängers, die für die Erfassung eines bestimmten Gegenstandes benötigte minimale Strahlungsleistung des Infrarot-Lichtimpulssenders zu bestimmen. Diese minimale Strahlungsleistung wird im folgenden Erfassungsleistung genannt. Da diese sowohl von den Reflexionseigenschaften wie auch vom Abstand des Gegenstandes zum Sende-/Empfangssystem abhängt, ergeben sich für das trockene oder mit Wasser gefüllte Waschbecken, für eine Hand oder irgendwelche andere Gegenstände verschiedene charakteristische Werte dieser Erfassungsleistung. In der erfindungsgemässen Anordnung wird die Erfassungsleistung laufend dem Hintergund bzw. auch einem sich verändernden Gegenstand nachgeführt, so dass die in der Erfassungszone befindlichen Gegenstände zusätzlich als ruhende oder bewegte Objekte identifiziert werden können.

Die auf diese Art gewonnenen Informationen werden beim erfindungsgemässen Verfahren z.B. von einem Mikroprozessor zur "intelligenten" Steuerung des Wasserflusses einer Waschanlage, aber auch zur stromsparenden Ueberwachung des Ruhezustandes sowie zur selbsttätigen Adaption an unterschiedliche Formen und Materialien der Waschbecken solcher Anlagen genutzt.

Zur Bestimmung bzw. Nachführung der Erfassungsleistung eignet sich unter anderen das als solches bereits bekannte Verfahren der sukzessiven Approximation. Es erlaubt die Bestimmung der Erfassungsleistung mit geringem technischem Aufwand und nahezu beliebiger Genauigkeit. Ausgehend vom halben Wert der maximal möglichen Strahlleistung wird die Strahlleistung des Infrarot-Lichtimpulses fortlaufend und abhängig vom Ausgangssignal eines im Infrarot-Empfangskanal befindlichen Schwellwertverstärkers mit abnehmend binär gewichteten Leistungsschritten erhöht oder erniedrigt. Das Verfahren liefert die Erfassungsleistung direkt in binär codierter Form.

Eine Sanitäranlage befindet sich während über 97% der gesamten Betriebszeit im Ruhezustand. In diesem Ruhezustand muss die Erfassungszonge permanent nach einem eventuell in diesem Bereich eintretenden Gegenstand, bei einer Waschanlage z.B. eine Hand, überprüft werden. Für die Lebensdauer der Batterie ist es daher ausschlaggebend, dass die während dieser Ruhezeit aktive Funktion der Gegenstands- bzw. Handerkennung mit geringstmöglichem Batteriestromverbrauch arbeitet. Das nachstehend beschriebene erfindungsgemässe Verfahren ermöglicht eine besonders stromsparende Gegenstands- bzw. Handerkennung während der Ruhephase.

Der Mikroprozessor und die gesamte Elektronik befinden sich ohne nach aussen gerichtete Aktivität in einem stromsparenden "Sleep mode". Nach Ablauf einer Verzögerungszeit von einigen Zehntel-Sekunden "weckt" sich der Mikroprozessor mit Hilfe seiner "Watch dog"-Funktion auf und überprüft das "Vorhandensein" des Hintergrunds bzw. des Waschbeckens mit Hilfe von zwei Infrarot-Sendeimpulsen im Mikrosekundenbereich, welche mit ihrer Strahlleistung der oberen und unteren Toleranzgrenze der zuvor abgespeicherten Erfassungsleistung des Waschbeckens entsprechen. Dieser Vorgang dauert nur sehr kurze Zeit, z.B. den Bruchteil einer Millisekunde.

Der Hintergrund bzw. das Waschbecken muss dabei beim oberen Wert der Strahlleistung vom Infrarot-Empfänger erfasst, beim unteren Wert jedoch nicht erfasst werden. Der Hintergrund bzw. das Waschbecken ist damit identifiziert und der Mikroprozessor versetzt sich wiederum in den "Sleep mode", ohne den Wasserfluss zu öffnen. Der Hintergrund bzw. das Waschbecken wird mit Bezug auf die Steuerung des Wasserflusses gewissermassen "ausgeblendet".

Wird der Hintergund bzw. das Waschbecken bei beiden Werten der Strahlleistung erfasst, bzw. nicht erfasst, so bedeutet dies, dass die Erfassungsleistung des Hintergrunds bzw. des Waschbeckens nicht mehr identifiziert werden kann - es befindet sich jetzt offenbar ein anderer Gegenstand, z.B. eine Hand, im Erfassungsbereich. Dieser Gegenstand wird nun durch Ermittlung und Analyse seiner gegebenenfalls varierenden Erfassungsleistung identifiziert und im Falle einer Gegenstands- bzw. Handerkennung der Wasserfluss sofort geöffnet.

Mit einer handelsüblichen Lithium-Batterie für Billigkameras kann mit diesem zuverlässig arbeitendem Verfahren für eine berührungslos betätigbare Waschtischarmatur eine Betriebszeit von über zwei Jahren bei 200'000 Waschvorgängen garantiert werden.

Das erfindungsgemässe Verfahren bezieht den Hintergrund, im Falle einer Waschanlage das Waschbecken, in das Messverfahren ein und blendet diesen Hintergrund selbsttätig aus. Dazu wird die Erfassungsleistung des Hintergrunds bzw. des Waschbeckens zu Beginn der Ruhephase gemessen, mit geeigneten Toleranzgrenzen versehen und abgespeichert. Dieser Vorgang ermöglicht wie erwähnt die stromsparende Gegenstands- bzw. Handerkennung während der Ruhephase, bewirkt aber auch gleichzeitig, dass bei der Montage und Inbetriebnahme der Anlage mit unterschiedlichen Hintergrundseigenschaften, z.B. bei verschiedenen Waschtischmodellen, keinerlei Einstellarbeiten erforderlich sind. Trotzdem ist durch das beschriebene Verfahren sichergestellt, dass sich die Erfassungszone der Gegenstands- bzw. Handerkennung immer bis zum Hintergrund, d.h. im Falle der Waschanlage bis zur Innenseite des Waschbeckens, erstreckt.

Die erfindungsgemässe Anordnung eignet sich insbesondere für eine Waschtischarmatur, da der optoelektronische Tastkopf mit sehr geringen Abmessungen gebaut und im schlanken Armaturenkopf hinter dem Perlator angeordnet werden kann. Sie kann jedoch auch zur Steuerung von anderen Sanitäranlagen, beispielsweise von Urinal- oder WC-Anlagen verwendet werden.

Ein Ausführungsbeispiel der Erfindung, eine Waschanlage, wird nachfolgend anhand der Zeichnungen näher erläutert. Es zeigen:
- Fig. 1: schematisch und teilweise im Schnitt eine Waschanlage mit Waschbecken und Waschtischarmatur, welche eine erfindungsgemässe Anordnung enthält,
- Fig. 2: einen Teilschnitt durch einen optoelektronischen Tastkopf,
- Fig. 3: das Blockschema einer elektronischen Schaltung,
- Fig. 4 bis 6: die Anlage gemäss Fig. 1 beim Aussenden von Infrarot-Lichtimpulsen mit unterschiedlicher Strahlstärke,
- Fig. 7: eine Darstellung der unterschiedlichen Infrarot-Strahl leistungen während einer sukzessiven Approximation, und
- Fig. 8: eine Waschanlage mit einem sich bewegenden Gegenstand im Erfassungsbereich der erfindungsgemässen Anordnung.

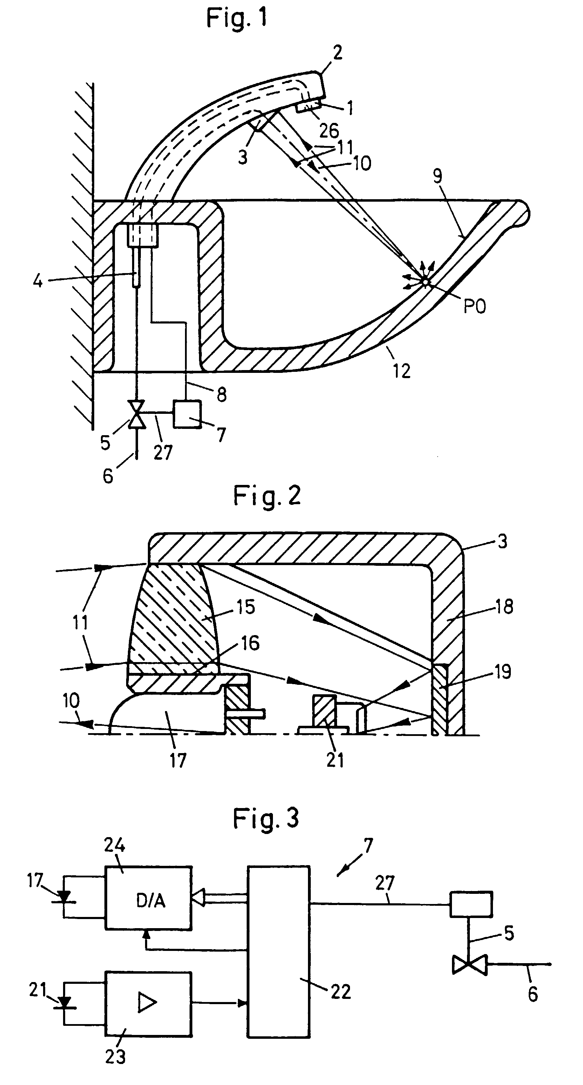

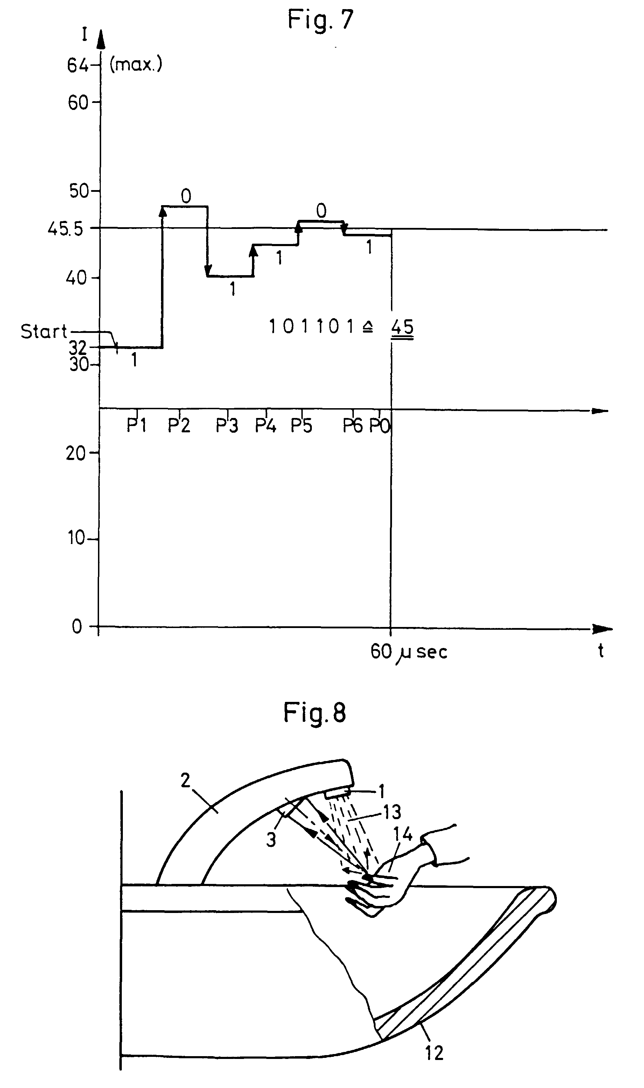

Fig. 1 zeigt eine Waschtischarmatur 25, die an einem Waschbecken 12 montiert ist, und die am oberen Ende einen Wasserauslauf 2 aufweist, welcher aus einem Perlator 1 mit Oeffnung 26 besteht. Der Perlator 1 ist an eine Wasserführung 4 angeschlossen, die ihrerseits über ein Magnetventil 5 mit einer Wasserversorgungsleitung 6 verbunden ist. Der Perlator 1 ist gegen eine Innenseite 9 des Waschbeckens 12 gerichtet und kann zusätzlich einen Mengenregler für den Wasserstrahl 13 (Fig. 8) enthalten. Am Wasserauslauf 2 ist zudem unterhalb des Perlators 1 ein optoelektronischer Tastkopf 3 angebracht, der über eine Signalleitung 8 mit einem elektronischen Steuergerät 7 verbunden ist. Das elektronische Steuergerät enthält eine hier nicht dargestellte auswechselbare Lithiumbatterie 2CR5/6Volt und ist seinerseits über eine Leitung 27 mit dem bipolaren "Low power"-Magnetventil 5 verbunden. Selbstverständlich sind neben der hier gezeigten Batteriestromversorgung auch andere bekannte Stromquellen möglich: Netzstromversorgung, Akkumulatoren mit und ohne Solarzellenladung usw. Der optoelektronische Tastkopf ist in Fig. 2 näher dargestellt. Dieser besteht aus einem zylindrischen Gehäuse 18 in dem eine Ringlinse 15 befestigt ist, welche ihrerseits in einer axialen Bohrung 16 eine Infrarot-Sende-LED 17 enthält. Diese LED 17 bildet eine Strahlungsquelle für Infrarot-Lichtimpulse 10, die bei der Anordnung gemäss Fig. 1 gegen die Innenseite 9 des Waschbeckens 12 gerichtet sind. Diese Infrarot-Lichtimpulse 10 werden an der Innenseite 9 des Waschbeckens diffusreflektiert. Ein Teil dieser reflektierten Strahlung 11 gelangt zur Ringlinse 15, welche die Strahlung 11 sammelt und gegen eine Infrarot-Photodiode 21, welche koaxial zur Ringlinse 15 im Gehäuseboden 18 montiert ist, lenkt.

Wie Fig. 3 zeigt, ist der Infrarot-Photodiode ein Schwellwertverstärker 23 mit konstantem, fest vorgegebenem Verstärkungsfaktor nachgeschaltet. Von einem Mikroprozessor 22 gesteuert, kann der ca. 5 Mikrosekunden dauerende Impulsstrom der Infrarot-Sende-LED 17 mittels eines einfachen 7-Bit-D/A-Wandlers 24 im Verhältnis 1:127 variiert werden. Damit wird die Erfassungsleistung bzw. die Erfassungszone des Systems in weiten Grenzen feinstufig verändert.

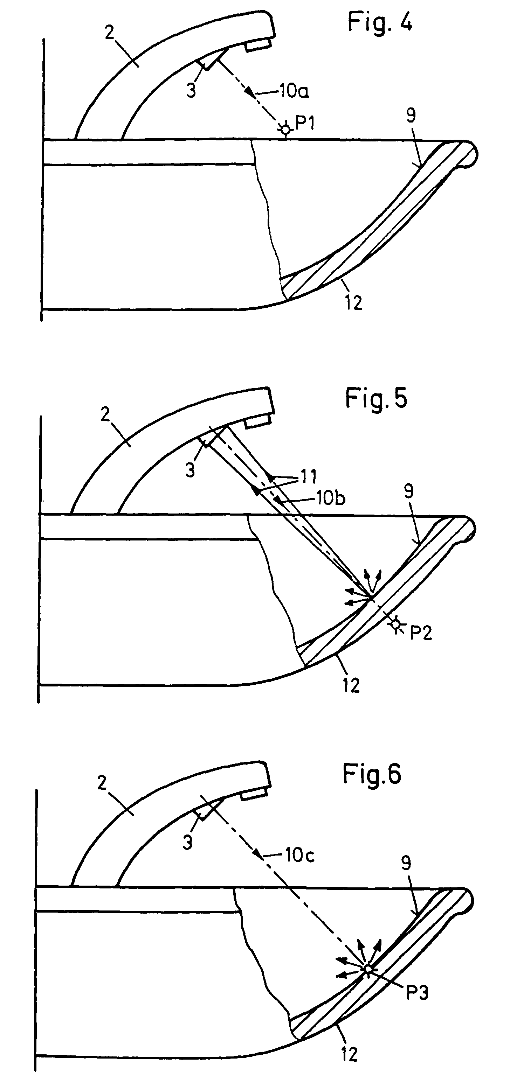

Fig. 4 zeigt einen vom Tastkopf 3 ausgehenden Infrarot-Lichtimpuls 10a, dessen Strahleistung mit Bezug auf die Reflexionseigenschaften der Innenseite 9 des Waschbeckens 12 einen Erfassungsbreich des Waschbeckens bis zum Punkt P1 entspricht. Mit anderen Worten, wenn sich die Innenseite 9 des Waschbeckens 12 zwischen Tastkopf 3 und Punkt P1 befinden würde, so würde der Schwellwertverstärker 23 (Fig. 3) ansprechen. Da sich die Reflexionsfläche des Waschbeckens jedoch ausserhalb ihres Erfassungsbereichs befindet, wird der Schwellwertverstärker 23 (Fig. 3) hier nicht ansprechen.

Fig. 5 zeigt eine zu Fig. 4 vergleichbare Situation. Der vom Tastkopf 3 ausgehende Infrarot-Lichtimpuls 10b wurde jedoch mit Bezug auf seine Strahlleistung wesentlich erhöht, was nun einem Erfassungsbereich des Waschbeckens bis zum Punkt P2 entspricht. Da die Reflexionsfläche des Waschbeckens hier innerhalb ihres Erfassungsbereichs liegt, wird der Schwellwertverstärker 23 (Fig. 3) jetzt ansprechen.

Fig. 6 zeigt eine zu Fig. 4 und 5 vergleichbare Situation. Der vom Tastkopf 3 ausgehende Infrarot-Lichtimpuls 10c weist jedoch eine Strahlleistung auf, welche einem Erfassungsbereich des Waschbeckens bis zum Punkt P3 entspricht. Da P3 genau auf der Innenseite 9 des Waschbeckens 12 liegt, entspricht diese Strahlleistung der Erfassungsleistung des Waschbeckens.

Um die zu Punkt P3 gehörende Erfassungsleistung des Waschbeckens zu ermitteln, bedient sich hier das Verfahren der sukzessiven Approximation. Ausgehend vom halben Wert der maximal möglichen Strahlleistung wird fortlaufend und abhängig vom Ansprechen des Schwellwertverstärkers 23 (Fig. 3) in binär gewichtet abnehmenden Leistungsschritten die Strahlleistung des Infrarot-Lichtimpulses bis zum kleinstmöglichen Leistungsschritt verändert. Wie Fig. 7 zeigt, wird mit diesem Verfahren der binär codierte Wert der Erfassungsleistung für die Innenseite 9 des Waschbeckens 12 mit insgesamt 7 Infrarot-Lichtimpulsen direkt ermittelt.

Der auf diese Weise ermittelte Wert der Erfassungsleistung für die Innenseite 9 des Waschbeckens 12 wird mit einer oberen Toleranzgrenze To und einer unteren Toleranzgrenze Tu versehen im RAM des Mikroprozessor 22 (Fig. 3) abgespeichert.

Die Anordnung geht nun in den sogenannten Ruhezustand über. Dazu versetzt sich der Mikroprozessor in einen stromsparenden sogenannten "Sleep mode" und schaltet die gesamte Steuerelektronik ab. Nach beispielsweise 0.3 Sekunden wird der Mikroprozessor durch seinen "Watch dog"-Timer wieder "geweckt". Sofort sendet er nun zwei Infrarot-Lichtimpulse von je 5 Mikrosekunden Dauer und mit den Strahlleistungen der gespeicherten Toleranzgrenzen To und Tu aus. Spricht der Schwellwertverstärker 23 (Fig. 3) bei der oberen Toleranzgrenze To an und bei der unteren Tu nicht, so ist damit das Waschbecken 12 identifiziert. Das System versetzt sich erneut in den Ruhezustand.

Spricht der Schwellwertverstärker 23 (Fig. 3) bei beiden Toleranzgrenzen To und Tu an oder bei beiden nicht, so befindet sich offenbar ein Gegenstand mit einer anderen Erfassungsleistung innerhalb der Erfassungszone des Waschbekkens. Das System wird nun sofort die Erfassungsleistung dieses Gegenstandes mit Hilfe der sukzessiven Approximation ermitteln und laufend nachführen. Wird dabei, wie in Fig. 8 gezeigt, festgestellt, dass es sich um einen bewegten Gegenstand, z.B. eine Hand 14 handelt, wird der Wasserfluss der Waschtischarmatur geöffnet.

Der Wasserfluss der Waschtischarmatur 25 wird wieder geschlossen, sobald die nachgeführte Erfassungsleistung während mindestens zwei Sekunden innerhalb der Toleranzgrenzen To und Tu liegt, was gleichbedeutend mit der Identifikation des Waschbeckens 12 ist.

Mit dem vorgeschlagenen Verfahren der Hintergrundüberwachung benötigt die erfindungsgemässe Anordnung während der Ruhephase, welche über 97% der Betriebszeit umfasst, nur einen minmalen Stromverbrauch. Vorteilhaft mit Bezug auf den Stromverbrauch ist zudem die durch das vorgeschlagene Verfahren ermöglichte kurze Impulsdauer des Infrarot-Lichtimpulses von beispielsweise 5 Mikrosekunden, die geringe Zahl dieser Impulse, welche durch das Verfahren der sukzessiven Approximation für die Bestimmung der Erfassungsleistung bzw. zur Handerkennung benötigt werden sowie der hohe Lichteinfall, welcher durch die Vewendung einer lichtstarken Ringlinse 15 im optoelektronischen Tastkopf bewirkt wird. Eine handelsübliche Lithiumbatterie 2CR5/6Volt ermöglicht daher bei 200'000 Waschvorgängen eine Betriebszeit von mindestens 2 Jahren.

Durch Einbezug der Reflexionsfläche des Waschbeckens in den Vorgang zur Handerkennung, die sogenannte Ausblendung des Hintergrunds, wird gleichzeitig eine automatische Adaption an unterschiedliche Formen und Materialien des Waschbeckens realisiert. Damit entfallen jegliche Einstellarbeiten während der Montage und Inbetriebnahme der Anordnung. Dennoch ist eine schnelle und zuvrlässige Handerkennung mit einer bis zum Waschtischboden reichenden Erfassungszone gewährleistet.

Die erfindungsgemässe Anordnung und insbesondere der optoelektronische Tastkopf lassen sich durch preisgünstige, handelsübliche miniaturisierte Bauteile realisieren. Sie eignet sich daher für Sanitäranlagen aller Art, beispielsweise für Urinal-Anlagen und insbesondere für Waschtischanlagen, wo die gesamte Anordnung vorzugsweise in der Waschtischarmatur untergebracht wird. Selbstverständlich sind auch andere Anordnungen denkbar, beispielsweise können Teile der Anordnung in einer verdeckten Aussparung des Waschtisches untergebracht sein.

## Patentansprüche

1. Anordnung zur berührungslosen Steuerung des Wasserflusses einer Sanitäranlage, insbesondere Wasch-, Urinal- oder WC-Anlage, mit einem optischen Tastkopf (3), der eine Strahlungsquelle (17) sowie einen Sensor (21) aufweist und der gegen einen Hintergrund (9,14) gerichtete Signale (10) aussendet und am Hintergrund (9,14) diffusreflektierte Signale (11) aufnimmt und einer Steuerelektronik (22) zur Steuerung beispielsweise eines in einer Wasserführung (4) angeordneten Ventils (5) zuführt, dadurch gekennzeichnet, dass die Strahlungsquelle (17) mit der Steuerelektronik (22) verbunden ist und die Strahlungsleistung der Strahlungsquelle (17) durch die Steuerelektronik (22) variierbar ist, um die für die Erfassung eines Gegenstandes (12, 14) benötigte minimale Erfassungsleistung der Strahlungsquelle (17) zu bestimmen und dass mittels der Steuerelektronik (22) diese minimale Strahlungsleistung den Reflexionseigenschaften des Gegenstandes (9, 14) nachgeführt wird.

2. Anordnung nach Anspruch 1, dadurch gekennzeichnet, dass die Steuerelektronik einen Mikroprozessor aufweist.

3. Anordnung nach Anspruch 1 oder 2, dadurch gekennzeichnet, dass die Steuerelektronik (22) Aenderungen der Erfassungsleistung (IA) zur Steuerung des Ventils (5) auswertet.

4. Anordnung nach einem der Ansprüche 1 bis 3, dadurch gekennzeichnet, dass die Steuerelektronik (22) die Erfassungsleistung mittels eines Approximationsverfahrens nachführt.

5. Anordnung nach Anspruch 4, dadurch gekennzeichnet, dass das Verfahren ein sukzessives Approximationsverfahren ist.

6. Anordnung nach einem der Ansprüche 1 bis 5, dadurch gekennzeichnet, dass der Tastkopf (3) Signale im nahen Infrarotbereich sendet und empfängt.

7. Anordnung nach einem der Ansprüche 1 bis 6, dadurch gekennzeichnet, dass der Tastkopf (3) eine lichtstarke Empfangslinse (15) aufweist, und dass die Strahlungsquelle (17) in einer Bohrung (16) der Empfangslinse (15) angeordnet ist.

8. Anordnung nach Anspruch 7, dadurch gekennzeichnet, dass der Sensor (21) hinter der Empfangslinse (15) koaxial zu dieser angeordnet ist.

9. Anordnung nach Anspruch 8, dadurch gekennzeichnet, dass der Sensor (21) vor einem Spiegel (19) angeordnet ist.

10. Anordnung nach einem der Ansprüche 1 bis 9, dadurch gekennzeichnet, dass die Strahlungsquelle (17) eine Infrarot-LED und der Sensor (21) eine Photodiode ist.

11. Anordnung nach einem der Ansprüche 1 bis 10, dadurch gekennzeichnet, dass dem Sensor (21) ein Schwellwertverstärker (23) nachgeschaltet ist.

12. Anordnung nach einem der Ansprüche 1 bis 11, dadurch gekennzeichnet, dass die Signale eine Sendeimpulsweite von wenigen Mikrosekunden, beispielsweise fünf Mikrosekunden aufweisen.

13. Verfahren zum Betrieb einer Anordnung nach einem der Ansprüche 1 bis 12, dadurch gekennzeichnet, dass die für die Erfassung bzw. Nichterfassung eines Hintergrundes (9,14) erforderliche Leistung gemessen wird.

14. Verfahren nach Anspruch 13, dadurch gekennzeichnet, dass die für die Erfassung bzw. Nichterfassung eines Hintergrundes (9,14) erforderliche Leistung durch ein vorgegebenes Toleranzfeld (T) erweitert und gespeichert wird.

15. Verfahren nach Anspruch 13 oder 14, dadurch gekennzeichnet, dass in vorbestimmten Zeitabständen mit jeweils wenigstens zwei Sendeimpulsen überprüft wird, ob die Reflexion des Hintergrundes (9,14) in einem gespeicherten Toleranzfeld (T) liegt.

16. Verfahren nach Anspruch 15, dadurch gekennzeichnet, dass dann, wenn die Reflexion im gespeicherten Toleranzfeld (T) liegt, die Anordnung in einen "Sleep-Modus" umgeschaltet wird und dass im anderen Fall eine Signalauswertung zur Gegenstandserkennung durchgeführt wird.

17. Waschtischarmatur mit einer Anordnung gemäss Anspruch 1, dadurch gekennzeichnet, dass der Tastkopf (3) nahe einer Auslaufdüse (1) am Wasserauslauf (2) angebracht ist und dass dieser Tastkopf (3) in koaxialer Anordnung die Strahlungsquelle (17), eine Empfangslinse (15) und den Sensor (21) enthält, und dass die Strahlungsquelle (17) ungefähr parallel zum austretenden Wasserstrahl abstrahlt.

## Claims

1. Arrangement for the non-contact control of the water flow in a sanitary installation, especially a washing, urinal or WC installation, having an optical sensing head (3), which has a radiation source (17) and a sensor (21), sends out signals directed towards a background (9, 14) and picks up signals (11) reflected diffusely at the background (9, 14) and feeds the said signals to an electronic control unit (22) for controlling, for example, a valve (5) arranged in a water conduit (4), characterized in that the radiation source (17) is connected to the electronic control unit (22), and the radiated power of the radiation source (17) can be varied by the electronic control unit (22), in order to determine the minimum detectable power of the radiation source (17) needed in order to detect an object (12, 14), and in that, by means of the electronic control unit (22), this minimum radiated power is caused to track the reflection properties of the object (9, 14).

2. Arrangement according to Claim 1, characterized in that the electronic control unit has a microprocessor.

3. Arrangement according to Claim 1 or 2, characterized in that the electronic control unit (22) evaluates changes in the detectable power (IA) in order to control the valve (5).

4. Arrangement according to one of Claims 1 to 3, characterized in that the electronic control unit (22) adjusts the detectable power by means of an approximation method.

5. Arrangement according to Claim 4, characterized in that the method is a successive approximation method.

6. Arrangement according to one of Claims 1 to 5, characterized in that the sensing head (3) sends and receives signals in the near infrared range.

7. Arrangement according to one of Claims 1 to 6, characterized in that the sensing head (3) has a high-aperture receiving lens (15), and in that the radiation source (17) is arranged in a hole (16) in the receiving lens (15).

8. Arrangement according to Claim 7, characterized in that the sensor (21) is arranged behind the receiving lens (15) coaxially with the latter.

9. Arrangement according to Claim 8, characterized in that the sensor (21) is arranged in front of a mirror (19).

10. Arrangement according to one of Claims 1 to 9, characterized in that the radiation source (17) is an infrared LED and the sensor (21) is a photodiode.

11. Arrangement according to one of Claims 1 to 10, characterized in that a threshold value amplifier (23) is connected downstream of the sensor (21).

12. Arrangement according to one of Claims 1 to 11, characterized in that the signals have a transmitted pulse width of a few microseconds, for example five microseconds.

13. Method of operating an arrangement according to one of Claims 1 to 12, characterized in that the power needed for the detection or non-detection of a background (9, 14) is measured.

14. Method according to Claim 13, characterized in that the power needed for the detection or non-detection of a background (9, 14) is expanded by a predefined tolerance band (T) and is stored.

15. Method according to Claim 13 or 14, characterized in that at predetermined time intervals, and using at least two transmitted pulses in each case, a check is made to ascertain whether the reflection from the background (9, 14) lies within a stored tolerance band (T).

16. Method according to Claim 15, characterized in that when the reflection lies within the stored tolerance band (T), the arrangement is switched over into a "sleep mode", and in that in the other case a signal evaluation is carried out in order to detect the object.

17. Wash-stand fitting with an arrangement according to Claim 1, characterized in that the sensing head (3) is fitted close to an outlet nozzle (1) on the water outlet (2), and in that this sensing head (3) contains the radiation source (17), a receiving lens (15) and the sensor (21) in a coaxial arrangement, and in that the radiation source (17) radiates approximately parallel to the emerging water jet.

## Revendications

1. Dispositif pour commander, sans contact, l'écoulement d'eau d'une installation sanitaire, notamment un lavabo, un urinoir ou un W.C., comportant une tête de détection optique (3), qui comporte une source de rayonnement (17) ainsi qu'un capteur (21) et qui émet des signaux (10) en direction d'une base (9,14) située en arrière, et reçoit des signaux (11) qui sont réfléchis d'une manière diffuse sur la base (9,14) située en arrière, et envoie ces signaux à un système électronique de commande (22) pour commander par exemple une vanne (5) disposée dans une canalisation d'amenée d'eau (4), caractérisé en ce que la source de rayonnement (17) est reliée au système électronique de commande (22) et la puissance de rayonnement de la source de rayonnement (17) peut être modifiée par le système électronique de commande (22) pour déterminer la puissance de détection minimale de la source de rayonnement (17), nécessaire pour la détection d'un objet (12,14), et que cette puissance de rayonnement minimale est asservie, au moyen du système électronique de commande (22), aux caractéristiques de réflexion de l'objet (9,14).

2. Dispositif selon la revendication 1, caractérisé en ce que le système électronique de commande comporte un microprocesseur.

3. Dispositif selon la revendication 1 ou 2, caractérisé en ce que le système électronique de commande (22) évalue des modifications de la puissance de détection (JA) pour la commande de la vanne (5).

4. Dispositif selon l'une des revendications 1 à 3, caractérisé en ce que le système électronique de commande (22) réalise l'asservissement de la puissance de détection au moyen d'un procédé d'approximation.

5. Dispositif selon la revendication 4, caractérisé en ce que le procédé est un procédé d'approximation à approximations successives.

6. Dispositif selon l'une des revendications 1 à 5, caractérisé en ce que le bouton poussoir (3) émet et reçoit des signaux dans la gamme du proche infrarouge.

7. Dispositif selon l'une des revendications 1 à 6, caractérisé en ce que la tête de détection (3) possède une lentille de réception (15) ayant une forte puissance lumineuse et que la source de rayonnement (17) est disposée dans un perçage (16) de la lentille de réception (15).

8. Dispositif selon la revendication 7, caractérisé en ce que le capteur (21) est disposé en arrière de la lentille de réception (15) coaxialement à cette dernière.

9. Dispositif selon la revendication 8, caractérisé en ce que le capteur (21) est disposé en avant d'un miroir (19).

10. Dispositif selon l'une des revendications 1 à 9, caractérisé en ce que la source de rayonnement (17) est une diode LED à infrarouge et que le capteur (21) est une photodiode.

11. Dispositif selon l'une des revendications 1 à 10, caractérisé en ce qu'un amplificateur à valeur de seuil (23) est branché en aval du capteur (21).

12. Dispositif selon l'une des revendications 1 à 11, caractérisé en ce que les signaux possèdent une largeur d'impulsion d'émission de quelques microsecondes, par exemple cinq microsecondes.

13. Procédé pour faire fonctionner un dispositif selon l'une des revendications 1 à 12, caractérisé en ce que la puissance nécessaire pour la détection ou la non détection d'une base (9,14) située en arrière est mesurée.

14. Procédé selon la revendication 13, caractérisé en ce que la puissance nécessaire pour la détection ou la non détection d'une base (9,14) située en arrière est accrue par un champ de tolérance prédéterminé (T) et est mémorisée.

15. Procédé selon la revendication 13 ou 14, caractérisé en ce qu'un contrôle est effectué à des intervalles de temps prédéterminé, respectivement à l'aide d'au moins deux impulsions d'émission pour déterminer si la réflexion de la base (9,14) située en arrière se situe dans le champ de tolérance mémorisé (T).

16. Procédé selon la revendication 15, caractérisé en ce que lorsque la réflexion se situe dans le champ de tolérance mémorisé (T), le dispositif est commuté dans un "mode de veille" et que, dans un autre cas, une évaluation du signal est effectuée pour l'identification d'un objet.

17. Lavabo comportant un dispositif selon la revendication 1, caractérisé en ce que la tête de détection (3) est montée à proximité d'une buse de sortie sur la sortie (2) pour l'eau et que cette tête de détection (3) contient, selon une disposition coaxiale, la source de rayonnement (17), une lentille de réception (15) et le capteur (21), et que la source de rayonnement (17) effectue une émission approximativement parallèlement au jet d'eau sortant.
